# EUROPEAN PATENT SPECIFICATION

(11) **EP 3 048 014 B1**
(45) Date of publication and mention of the grant of the patent: **13.03.2019**
(21) Application number: 15000215.2
(22) Date of filing: 26.01.2015
(51) Int. Cl.: B60R 11/00, B60Q 1/48

(54) **DEVICE FOR THE REMOTE OPENING OF AUTOMATIC DOORS, TO BE INCORPORATED IN VEHICLES**
VORRICHTUNG ZUM FERNÖFFNEN VON AUTOMATISCHEN TÜREN FÜR DEN EINBAU IN FAHRZEUGE
DISPOSITIF POUR L'OUVERTURE DE PORTES AUTOMATIQUES À DISTANCE, DESTINÉ À ÊTRE INCORPORÉ DANS DES VÉHICULES

(43) Date of publication of application: 27.07.2016
(73) Proprietor: Góngora Martínez, Yaiza, 08850 Gava Mar (ES)
(72) Inventor: Góngora Martínez, Yaiza, 08850 Gava Mar (ES)
(74) Representative: Isern-Jara, Jaime

(56) References cited:
- EP-A1- 0 689 964
- WO-A1-00/61898
- WO-A2-2007/006468
- GB-A- 2 241 680
- US-A- 4 247 850
- US-A1- 2005 264 891
- - J02028 Anon: "REMOTE CONTROL GARAGE DOOR OPENER KITS GENERAL Kit Numbers", , 7 September 2010 (2010-09-07), pages 1-16, XP055199116, Retrieved from the Internet: URL:http://www.harley-davidson.com/app-con tent/service/isheets/-J02028.PDF [retrieved on 2015-06-30]

## Description

### FIELD OF THE INVENTION

The invention refers to a device permitting the integration of one or more remote opening commands for doors in any type of vehicle, whether of two, three, four or more wheels.

### STATE OF THE ART

At present, it is usual to carry out the opening of automatic doors in private garages, parkings and public places by means of a remote control command as a substitution of the traditional key.

Each remote control command is codified to open an automatic door for which reason the user needs a remote control command for each different automatic door he has to open.

Generally, the user brings the vehicle sufficiently close to the automatic door for the command to be within its the commanding range and afterwards he operates the push button for data transfer. At this moment, basically the code of the command is emitted and captured by the device of the door and if it is correct, the opening of the door proceeds.

However, it is to be considered as a disadvantage the fact that the command is not integrated in the vehicle because the simple theft of the apparatus, for instance after entering the burglar into the vehicle after breaking a glass, window, will permit the access to the controlled premises to non authorized persons, forcing the new programming of the rest of devices or the door itself.

On the other side, this system is so extended in the urban society that usually the user has to operate more than one automatic door in his daily routine, for which reason he must carry with him at all time various remote control commands, which additionally should be suitably identified to permit to find out which command opens each of the doors.

The resulting problem is obvious, as the need of multiple remote control commands to operate different doors makes difficult its use, particularly if all of them are of the same model, and have to be transported by the user or located inside the vehicle in a place which is sufficiently at hand for reaching them effortless and permitting the easy visual identification of each one of the remote control commands, all of this being almost impossible in some type of vehicles, for instance a motorcycle.

It would be beneficial to develop a device permitting to incorporate one or more remote control commands corresponding to different doors in the same vehicle in a form that its use could made through a push button located in the vehicle, being the command itself concealed and protected.

In the state of the art it is known the existence of remote control commands integrated in the vehicles, such as the one disclosed in the disclosure: "Remote control garage door opener kits" (Harley-Davidson).

### DESCRIPTION OF THE INVENTION

The invention has the objective to provide a device capable to contain one or more remote control commands for automatic doors in a vehicle non having this means originally, so that the commands may remain concealed with capacity to be activated at will by the user by means of one or more activation push buttons located in a place which is easily accessible to the driver, for instance the dashboard of the vehicle.

The new device essentially consists in a connection cable hose with four cables for each remote control command and one push button to be integrated in the vehicle.

Two of the cables of the connection cable hose are current feeding cables and are connected to the contacts of the battery of the remote control command from one side and to an active cable and to the ground connection of the car from the other side.

Another aspect of the invention consists in the incorporation of a complementary keyboard or set of push buttons, also integrated in the vehicle, by means of which the user can press the keys to enter the number of code for identification associated to the remote control command, so that one more security level is added to its use.

This identification code addresses the activation towards a given remote control command, and consequently permits the opening of the door associated to the same.

In this case, the device has as well an electronic card concealed within the vehicle, to which the keyboard or push buttons set are operatively connected, as well as the opening push button and the remote control commands.

It is to be remarked that the different remote control commands are located in a concealed way inside the vehicle and optionally within an appropriated external container.

### DESCRIPTION OF ONE EXAMPLE

With the purpose to illustrate all the above exposed, a set of drawings is attached to the present description.

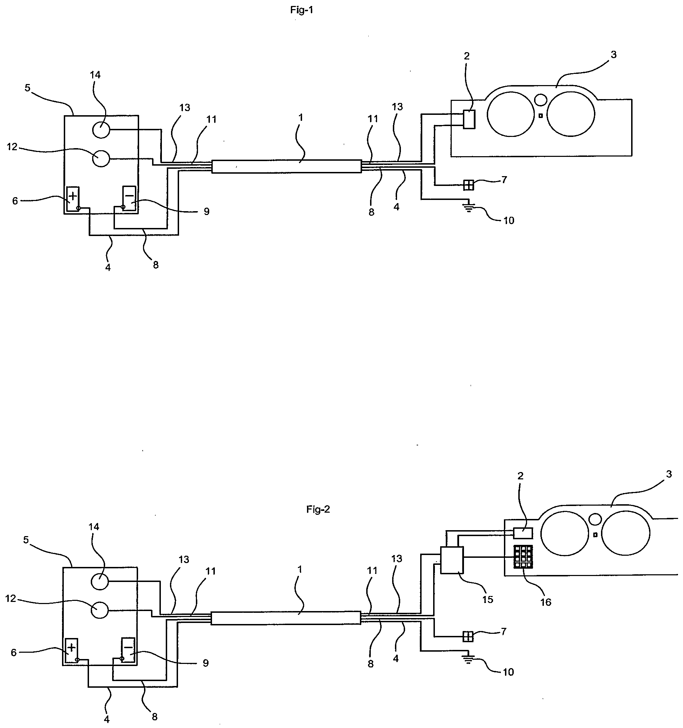

In the drawings, figure 1 corresponds to a remote control command incorporated in a vehicle.

Figure 2 corresponds to a diagrammatic representation of the invention with blocking function by means of an identification number.

The device according to figure 1 consists in a connection cable hose (1) with four cables and a bipolar push button (2) located on the dashboard (3) of a vehicle.

The first cable (4) of the connection cable hose (1) is connected to the (+) contact of the battery (6) of the remote control command (5) and to a (+) active cable of the vehicle (7).

The second cable (8) of the connection cable hose (1) is connected to the (-) contact of the battery (9) of the remote control command (5) from on one side and to the ground connection of the car (10) from the other side.

The third cable (11) is connected to the opening push button (12) of the command from one side and to the push button (2) on the dashboard from the other side.

The fourth cable (13) is connected to the closing push button (14) of the command from one side and to the push button (2) on the dashboard from the other side.

In the example, the operation of the bipolar push button in a sense, closes the circuit of the push button for opening of the command (12) opening the automatic door, while in case of activation of the push button in the contrary sense the circuit for closing the command (14) will be closed, so that the automatic door will be operated for its closing.

The device according to the example shown in figure 2 has as well an electronic card (15) and a keyboard (16) integrated in the dashboard (3) of the vehicle.

In this case, the third cable (11) and the fourth cable (13) of the connection cable hose (1) associated to each command (5) are connected to the push button (2) through the electronic card (15) to which the keyboard (16) is also connected.

In this example, before activating the bipolar push button (2) it is necessary to enter a code number by means of keyboard (16) in order that the electronic card (15) activates the connection between the push button (2) and a given remote control command (5). Once the connection has been established, the operation proceeds as in the previous example.

### LIST OF REFERENCES

- 1.: connection cable hose
- 2.: push button
- 3.: dashboard of the vehicle
- 4.: first cable
- 5.: remote control command
- 6.: (+) connection of the command
- 7.: (+) cable in the vehicle
- 8.: second cable
- 9.: (-) connection of the command
- 10.: ground connection of the vehicle
- 11.: third cable
- 12.: opening push button of the command
- 13.: fourth cable
- 14.: closing push button of the command
- 15.: electronic card
- 16.: keyboard

## Claims

1. Device for the remote opening of automatic doors, to be incorporated in vehicles, **characterized in that** it comprises
- one or more remote control commands (5)
- a connection cable hose (1) with four cables associated to each remote control command (5) to be connected
- a push button (2) located on the dashboard (3) of the vehicle
- an electronic card (15) and a keyboard (16) integrated in the dashboard (3) of the vehicle and operatively connected to the electronic card (15)
wherein:
- the first cable (4) of the connection cable hose (1) is connected by one of its ends to the (+) contact (6) of a battery of the remote control command (5) and by the other end to an active cable of the vehicle (7);
- the second cable (8) of the connection cable hose (1) is connected at one end to the (-) contact (9) of the battery of the remote control command (5) and at the other end to the ground connection (10) of the vehicle;
- the third cable (11) of the connection cable hose (1) is connected at one end to the opening push button (12) of the remote control command via the electronic card and connected to the push button (2) through the electronic card (15);
- the fourth cable (13) of the connection cable hose (1) is connected by at one end to the closing push button (14) of the remote control command, via the electronic card and connected to the push button (2) through the electronic card (15).

2. Device for the remote opening of automatic doors, to be incorporated in vehicles, according to claim 1, **characterized in that** the third cable (11) and the fourth cable (13) of the connection cable hose (1) are connected by one of its ends to the push button (2) of the vehicle.

## Patentansprüche

1. In Fahrzeuge einzubauende Vorrichtung zum Fernöffnen automatischer Türen, **dadurch gekennzeichnet, dass** sie umfasst:
- einen oder mehrere Fernbedienungsbefehle (5)
- einen Verbindungskabelschlauch (1) mit vier jedem Fernbedienungsbefehl (5) zugeordneten anzuschließenden Kabeln
- einen auf dem Armaturenbrett (3) des Fahrzeugs befindlichen Taster (2)
- eine elektronische Karte (15) und eine in das Armaturenbrett (3) des Fahrzeugs integrierte und mit der elektronischen Karte (15) wirkverbundene Tastatur (16)
wobei:
- das erste Kabel (4) des Verbindungskabelschlauchs (1) durch eines seiner Enden mit dem (+) Kontakt (6) einer Batterie des Fernsteuerbefehls (5) verbunden ist und durch das andere Ende mit einem aktiven Kabel des Fahrzeugs (7);
- das zweite Kabel (8) des Verbindungskabelschlauchs (1) an einem Ende mit dem (-) Kontakt (9) der Batterie des Fernsteuerbefehls (5) verbunden ist und am anderen Ende mit dem Erdanschluss (10) des Fahrzeugs;
- das dritte Kabel (11) des Verbindungskabelschlauchs (1) an einem Ende über die elektronische Karte mit dem Öffnungstaster (12) des Fernsteuerbefehls verbunden ist und durch die elektronische Karte (15) mit dem Taster (2);
- das vierte Kabel (13) des Verbindungskabelschlauchs (1) an einem Ende über die elektronische Karte mit dem Schließtaster (14) des Fernsteuerbefehls verbunden ist und durch die elektronische Karte (15) mit dem Taster (2).

2. In Fahrzeuge einzubauende Vorrichtung zum ferngesteuerten Öffnen automatischer Türen nach Anspruch 1, **dadurch gekennzeichnet, dass** das dritte Kabel (11) und das vierte Kabel (13) des Verbindungskabelschlauchs (1) durch eines seiner Enden mit dem Taster (2) des Fahrzeugs verbunden sind.

## Revendications

1. Dispositif pour l'ouverture à distance de portes automatiques, à intégrer dans des véhicules, **caractérisé par le fait qu'**il comprend :
- une gaine de câbles de connexion (1) avec quatre câbles associés à chaque télécommande (5) à connecter.
- un bouton-poussoir (2) installé sur le tableau de bord (3) du véhicule.
- une carte électronique (15) et un clavier (16) intégrés dans le tableau de bord (3) du véhicule et connecté à distance à la carte électronique (15).
Où :
- Le premier câble (4) de la gaine de câbles de connexion (1) est relié par l'une de ses extrémités au contact (+) (6) d'une batterie de la télécommande (5) et par l'autre extrémité à un câble actif du véhicule (7) ;
- Le deuxième câble (8) de la gaine de câbles de connexion (1) est relié par l'une de ses extrémités au contact (-) (9) de la batterie de la télécommande (5) et par l'autre extrémité au branchement à la terre (10) du véhicule ;
- Le troisième câble (11) de la gaine de câbles de connexion (1) est relié par l'une de ses extrémités au bouton-poussoir d'ouverture (12) de la télécommande par une carte électronique et relié au bouton-poussoir (2) par la carte électronique (15) ;
- Le quatrième câble (13) de la gaine de câbles de connexion (1) est relié par l'une de ses extrémités au bouton-poussoir de fermeture (14) de la télécommande par la carte électronique et connecté au bouton-poussoir (2) par la carte électronique (15).

2. Dispositif pour l'ouverture à distance de portes automatiques, à intégrer dans des véhicules, conformément à la revendication 1, **caractérisé par le fait que** le troisième câble (11) et le quatrième câble (13) de la gaine de câbles de connexion (1) sont reliés par l'une de leurs extrémités au bouton-poussoir (2) du véhicule.
